# EUROPEAN PATENT APPLICATION

(11) **EP 1 078 565 A1**
(43) Date of publication of application: **28.02.2001**
(21) Application number: 00307202.2
(22) Date of filing: 22.08.2000
(51) Int. Cl.: A01D 17/06, A01D 33/08

(54) **Driving mechanism for a separator**

(30) Priority: 24.08.1999 GB 9919931
(71) Applicant: REEKIE MANUFACTURING LTD., Forfar, Tayside, Angus DD8 1UQ (GB)
(72) Inventor: Mitchell, James Fraser, By Forfar, Tayside DD8 3PD (GB)
(74) Representative: Kerr, Sheila Agnes Fife

(57) **Abstract**

A separator (1) for separating tubers (14) from haulm (15) etc. and having at least one pair of parallel elongate rollers (2) arranged traversely to the direction of travel thereover of objects (e.g. tubers (14) and haulm (15)) to be separated. Above the rollers (2) is an endless belt (3) having an engaging reach for engagement with the tubers (14) on the rollers (2) so as to move the tubers (14) therealong. The rollers (2) are driven by a motor (29) through gear means (20), which are formed and arranged for selectively transmitting drive to the rollers (2) in a first condition so that the rollers (2) rotate in opposite directions and in a second condition so that the rollers (2) rotate in the same direction. A control means (60) is provided to allow selection of desired first and second conditions of the gear means (20).

## Description

The present invention relates to apparatus suitable for use in separating potatoes or other tubers or the like from stones, clods, haulm, weeds etc which are inadvertently collected during harvesting, and more particularly, although not exclusively, to such an apparatus which includes a bed of rollers for separating.

Our European Patent No. 0 548 192 describes a separator for use in separating tubers and the like from haulms, clods, weeds, stones and the like collected during harvesting, which separator includes a plurality of elongate rollers arranged in counter-rotating pairs, with their longitudinal axes parallel to the direction of travel of crop thereover, and with an overhead conveyor, preferably in the form of an endless pintle belt, arranged above the bed of rollers so as to captively retain the tubers or the like between the overhead conveyor and channels defined by the pairs of counter-rotating rollers.

One problem with this separator is that it performs with varying levels of effectiveness in different weather conditions. For example, in very wet conditions all the mud, clods and stones collected with the tubers during harvesting may not be separated from the tubers. Moreover, in very dry conditions, where there is little soil or stones collected along with the tubers during harvesting, the tubers are subjected to the same agitation by the rollers as they would be subjected to if they had been collected in less dry ) conditions where greater agitation is required for effective separation. This can lead to undesirable damage to the tubers.

It is an object of the present invention to avoid or minimise one or more of the foregoing disadvantages. It is a further object of the invention to provide a separator which has different operating modes suited to different conditions of a harvested crop being separated, and which may be changed relatively easily from one mode to another by the user.

According to the present invention we provide a separator for use in separating tubers or the like from haulm, clods, weeds, stones and the like collected during harvesting, the separator comprising: a pair of substantially parallel elongate rollers arranged transversely to the direction of travel thereover of objects to be separated; an overhead endless belt having an engaging reach arranged above the rollers for engagement with tubers or the like disposed on said rollers in use of the separator, so as to impart drive to the tubers; roller driving means comprising a drive motor and gearing means for transmitting drive from the drive motor to the rollers, said gearing means being formed and arranged for selectively transmitting drive to the rollers in a first condition so that the rollers rotate in opposite directions and in a second condition so that the rollers rotate in the same direction; and control means for enabling a user to select a desired one of said conditions of the gearing means.

One advantage of the separator of the invention is that it provides greater flexibility of operation to suit different conditions of the harvested crop to be separated.

Preferably, the separator comprises a multiplicity of substantially parallel elongate rollers arranged transversely to the direction of travel thereover of the objects to be separated and the gearing means is formed and arranged for controlling the rotation of the rollers in at least two adjacent pairs of the rollers so that in a first condition of the gearing means alternate rollers contra-rotate and in a second condition of the gearing means all the rollers in said pairs rotate in the same direction, said control means being formed and arranged to enable a user to set the gearing means in a selected one of said first and second conditions. The engaging reach of the overhead endless belt preferably extends over a substantial number of said multiplicity of rollers.

Where the crop to be separated is being harvested in dry weather conditions the user will select the first condition of the gearing means so that the rollers in said adjacent pairs rotate in the same direction. Conversely, where the harvested crop contains more clods, mud etc., the user will select the second condition in which the rollers in the adjacent pairs are contra-rotating. The contra-rotating action is most effective for separating the tubers from mud, clod etc, collected in wet harvesting conditions, while having the rollers rotating in the same direction in dry weather conditions moves the tubers over the separator more quickly and with less agitation, thereby minimising damage to the tubers.

Conveniently, the gearing means may be formed and arranged for transmitting drive from each roller to the next roller, from an upstream end of the separator towards a downstream end thereof. Preferably, the gearing means comprises gearwheels formed and arranged such that in said first condition of the gearing means drive is transmitted directly from each roller to the next roller in the downstream direction, via gearwheels mounted on and rotating with said roller and said next roller respectively, and in said second condition of the gearing means drive is transmitted indirectly between at least some adjacent rollers, via an idler gearwheel located between the adjacent rollers.

Opposite end portions of each roller are preferably mounted in opposing elongate members of a frame means of the separator. Each roller preferably comprises a roller portion affixed to a drive axle. In the preferred embodiment, the gear means preferably comprises: a first set of gearwheels mounted to the drive axles of a first set of the rollers for rotation therewith; a second set of gearwheels arranged for rotation about the drive axles of a second set of the rollers, via bearing means mounted radially between the drive axles of said second set of the rollers and said second set of gearwheels, wherein each gearwheel of said second set of gearwheels is adjacent at least one gearwheel of said first set of gearwheels for driven engagement therewith; a third set of gearwheels comprising idler gearwheels formed and arranged for rotation by a fourth set of gearwheels, said fourth set of gearwheels being mounted for rotation with the same drive axles as said first set of gearwheels; and a fifth set of gearwheels comprising a respective moveable gearwheel provided for each one of said rollers provided with one of said second set of gearwheels, each said moveable gearwheel being splined to the drive axle of said roller and slideable between a first end position in which said moveable gearwheel is rotated by a respective said one of the idler gearwheels, and a second end position in which said moveable gearwheel is engaged with a respective gearwheel of said second set of gearwheels so as to cause the roller drive axle splined to said moveable gearwheel to instead rotate therewith.

The rollers of said first and second sets of rollers are preferably interspersed such that, with said movable gearwheels in their second end positions, the separator comprises at least two, preferably adjacent, pairs of contra-rotating rollers.

Preferably, each of said second set of gearwheels has internal gear teeth for complimentary engagement with external gearteeth of a respective said moveable gearwheel when the moveable gearwheel is in its second end position, whereby the roller drive axle, moveable gearwheel and respective gearwheel of said second set of gearwheels are locked together for rotation in the same direction.

It will be understood that with said moveable gearwheels in their first end position, in which they are driven by said idler gearwheels so as to be rotated in the same direction as said first set of gearwheels, the second set of gearwheels in driven engagement with said first set of gearwheels therefore rotate around said bearings which, in turn, are freely rotatable about the drive axles which they surround. Thus, although the first set of gearwheels drives the second set of gearwheels so as to contra-rotate with adjacent ones of said first set of gearwheels, the rollers carrying said second set of gearwheels do not countra-rotate with the adjacent rollers carrying said first set of gearwheels. Instead the rollers carrying said second set of gearwheels are driven by said idler gearwheels so as to rotate in the same direction as the adjacent rollers carrying said first set of gearwheels.

Said control means may conveniently comprise control lever means mechanically linked to one or more of said movable gearwheels and protruding from the frame means of the separator, for enabling a user to slide said moveable gearwheel(s) between said first and second end positions. A separate control lever means is preferably provided for each said roller which has a said moveable gearwheel slideably mounted thereto. Alternatively, said moveable gearwheels may be moved between their first and second said end positions automatically by any suitable means such as, for example, hydraulic means and/or electrical means provided with the separator.

In the separator of the invention it will therefore be appreciated that a user may select how many pairs of adjacent rollers he wishes to be contra-rotating and/or how many rollers he wishes to have rotating in the same direction. The user may thus adjust the moveable gearwheels, using the control lever means provided for this purpose, in order to set the rollers to rotate in the desired directions. Preferably, each said moveable gearwheel is independently moveable relative to the other said moveable gearwheels. In this manner individual ones of the alternate rollers carrying said moveable gearwheels may be set to rotate in a desired direction. For example, the user may wish to set the gear means so that in a first portion of the roller bed all the rollers rotate in the same direction and in a second portion of the roller bed there are contra-rotating pairs of rollers. Different roller patterns can be used to suit different conditions of (and/or type of) the crop being separated, thereby enabling the user to select a roller rotation pattern providing optimum separation and minimum crop damage, in the weather conditions being experienced.

According to another aspect of the invention we provide agricultural apparatus incorporating a separator as above-described. The agricultural apparatus may, for example, be a harvester or a grader.

A preferred embodiment of the invention will now be described, by way of example only, and with reference to the accompanying drawings in which:
Fig. 1 is a schematic cross sectional side view of a bed of rollers with an overhead pintle belt in a separator according to the invention;
Fig. 2 is a part cut away side view of a gearing arrangement of a separator according to the present invention;
Fig. 3 is a plan view of the gearing arrangement of Fig. 2, as arranged on the drive axles of the rollers;
Fig. 4 is a plan view of two pairs of the roller drive axles of Fig. 3, showing moveable gearwheels provided for alternate rollers, one moveable gearwheel being shown in a first end condition and the other moveable gearwheel being shown in its second end condition; and
Fig. 5 is a schematic cross-sectional view of the bed of rollers from the separator of the invention, where the bed of rollers is inclined in a downward slope.

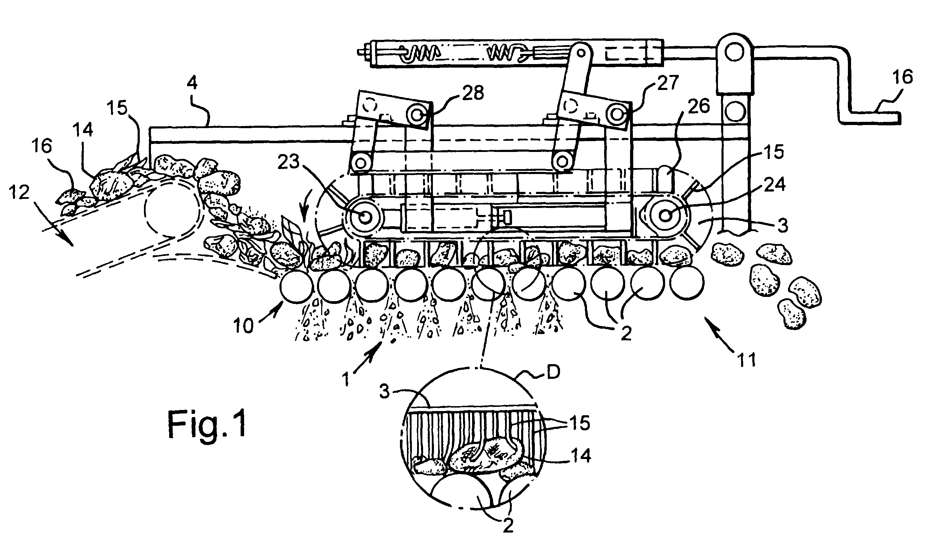

Fig. 1 is a side elevation of a separator according to the invention comprising a bed of rollers 2 and an overhead endless belt 3. The rollers 2 and overhead endless belt 3 are shown in cross section in Fig. 1. The rollers 2 are mounted in a frame 4 which also mounts the overhead endless belt 3 above the rollers 2. A supply conveyor 12 (indicated in broken lines) loads a mixture of potatoes 14 along with other debris including haulms 15, stones and clods 16 onto a loading end portion 10 of the bed of rollers. The overhead endless belt 3 is in the form of a pintle belt made up of a closely spaced array of flexible fingers 15 extending substantially across the whole length and width of the endless belt 3, as illustrated in the detail view (D) of Fig. 1. The fingers 15 pare easily deformable to give way and bend around the potatoes 14 without damaging them whilst engaging them with sufficient force to apply to then a more or less positive driving force along the bed of rollers 2. (For clarity only some of the fingers 15 are shown in the main view of Fig.1). The pintle belt 3 is mounted around two return rollers 23, 24 the forwardmost one 24 of which is provided with a hydraulic motor 26 to drive the belt 3. The belt 3 is rotated in an anti-clockwise direction (F) in Fig. 1, so as to drive the potatoes 14 from the upstream (loading) end 10 to the downstream end 11 of the bed of rollers 2. The endless belt 3 is pivotally mounted to the separator frame to a front pivot point 28 and a rear pivot point 27 and spaced apart elongate sides (not shown) of the frame 4 in the same manner as described in our earlier European Patent No. 0 548 192 B1 so that the height of the endless belt 3 above the rollers 2 can be adjusted, using an adjustment handle 16 so as to lift or lower the pintle belt 3. The rollers 2 in the bed of rollers are each covered with a layer of resiliently deformable material such as rubber foam, preferably provided with a protective outer skin, e.g. of a plastic material, in generally known manner, so that the potatoes 14 are not damaged as they pass over them. All or some (e.g. alternate ones) of the rollers may be scrolled, i.e. provided with a helical rib extending between the ends of the rollers. The speed of the overhead pintle belt 3 can be varied by a user. This is achieved automatically by means of electrical controls linked to the motor driving the two return rollers 23, 24 driving the belt 3.

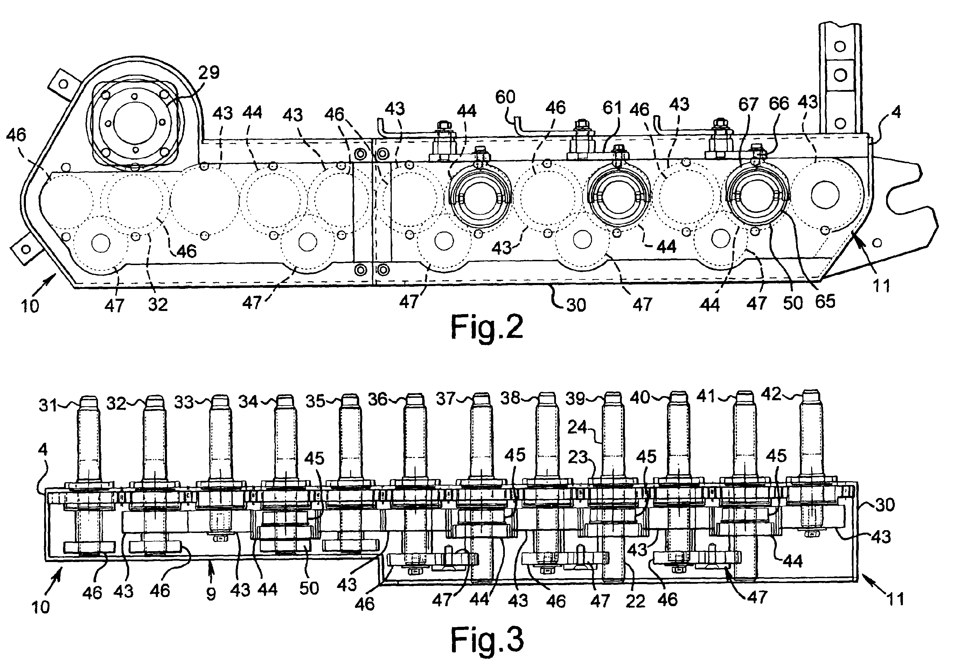

Fig. 2 is a side elevation of an elongate side member 30 of the frame 4 in which the rollers 2 are mounted, with an end plate of the frame taken away so as to display a gearing arrangement 20 housed inside which controls the direction of rotation of each of the rollers 2.

Fig. 3 is a plan view of the gearing arrangement 20 shown in Fig. 2, showing the way in which various gearwheels are mounted on drive axles 22 of the rollers. As will be clear from Fig. 3, each roller 2 comprises a drive axle 22 mounted via a rotatable bearing 23 for rotation in an elongate side member 30 of the frame 4. Each drive axle has a roller mounting portion 24 which protrudes from the frame 4. To each roller mounting portion a central roller portion (not shown) of the roller is affixed at one end thereof, the other end of the central roller portion being affixed to a similar roller mounting portion mounted for rotation in an opposing elongate side member of the frame 4 of the separator.

There are in all, twelve rollers in the bed of rollers. In Fig. 3, the twelve roller axles 22 are referenced from left to right as axles 31-42. The gearing is arranged in two sections, a first section for an upstream portion of the roller bed having five of the roller axles 31-35, and a second section for a downstream portion of the roller bed having seven of the roller axles 36-42. A single drive motor 29 drives all of the roller axles, drive being passed along the roller bed from one roller axle to the next by means of the gearing provided. In the downstream portion, the first axle 36 and every following alternate roller axle 38,40,42 has a first gearwheel 43 mounted to the axle in a fixed position thereon. These first gearwheels 43 are hereinafter referred to as "the first set of gearwheels 43". The second roller axle 37 in said downstream portion of the roller bed, and every following alternate axle 39,41, has a respective gearwheel 44 arranged thereon, these gearwheels (hereinafter referred to as "the second set of gearwheels 44") having the same outer diameter as the gearwheels 43 of the first set of gearwheels and having complementary teeth for engaging with the teeth on said first set of gearwheels. However, each gearwheel 44 of the second set of gearwheels is freely rotatable about the axle which it surrounds, there being a bearing 45 disposed radially between the axle 37 and the freely rotatable gearwheel. The roller axles thus form three pairs of axles, each pair 36,37 having one axle 36 carrying one of said first set of gearwheels 43, and one axle 37 carrying one of said second set of gearwheels 44, there being one further axle 42 (the most downstream one) left over. Below each of these pairs of axles, spaced generally equidistantly between the two axles 36,37 of the pair, and forward of the first and second sets of gearwheels 43,44 arranged thereon (so as to be located closer to an outside face 9 of the elongate member 30 of the separator frame 4) there is an idler gearwheel 47. The idler gearwheels are hereinafter referred to as the third set of gearwheels 47, and are driven by a fourth set of gearwheels 46, each one of said fourth set of gearwheels being affixed to a respective axle 36,38,40,42 which also has one of said first set of gearwheels affixed thereto. Thus, when the first set of gearwheels 43 rotate, they cause the respective roller axles 36,38,40,42, to which they are mounted, the fourth set of gearwheels 46, and the idler gearwheels 47 to also rotate. It will be appreciated that when the first roller axle 36 in the downstream portion of the roller bed is rotated in a clockwise direction, the idler gearwheel 47 adjacent thereto will thus be rotated in the anti-clockwise direction, and the freely rotatable gearwheel 44 on the next axle in the downstream direction will also rotate in the anticlockwise direction, about the axle 37 which it encircles. Each subsequent one of the gearwheels in said first and second sets of gearwheels 43,44 will be driven by the adjacent upstream gearwheel thereto so that drive is passed all the way along the gearwheels to the most downstream one.

The roller axles 31-35 in the upstream portion of the roller bed are provided with a similar gearwheel arrangement via which drive is imparted to the gearwheels in the downstream portion of the roller bed from a single drive motor 29 provided at the upstream end of the roller bed, which drives one 32 of the roller axles therein via one of the first set of gearwheels 43 affixed thereto. The gearing arrangement in this upstream portion of the roller bed is though slightly different in that the first one 31 of the axles (the most upstream one) is driven by an idler roller placed below and between this axle and the second axle which is the axle carrying the gearwheel 43 driven by the motor 30. This second axle 32 and the fifth axle 35 are each of the afore-described type in said downstream end of the roller bed having gearwheels of the first and fourth sets of gearwheels affixed thereto. The fourth axle 34 is of the afore-described type in said downstream end of the roller bed having a freely rotatable gearwheel 44 arranged thereon and there is a further idler gearwheel 47 below and between the fourth and fifth axles and which is rotated by the gearwheel 46 provided on the fifth axle 35 for this purpose. The third axle 33 has only one of the first type of gearwheels 43 affixed thereon, there being no idler gearwheel 47 located between this gearwheel and any of the adjacent gearwheels thereto. The first gearwheel 43 on the most downstream roller axle 35 in the upstream portion of the roller bed drives the adjacent first gearwheel 43 on the most upstream roller 36 in the downstream portion of the roller bed.

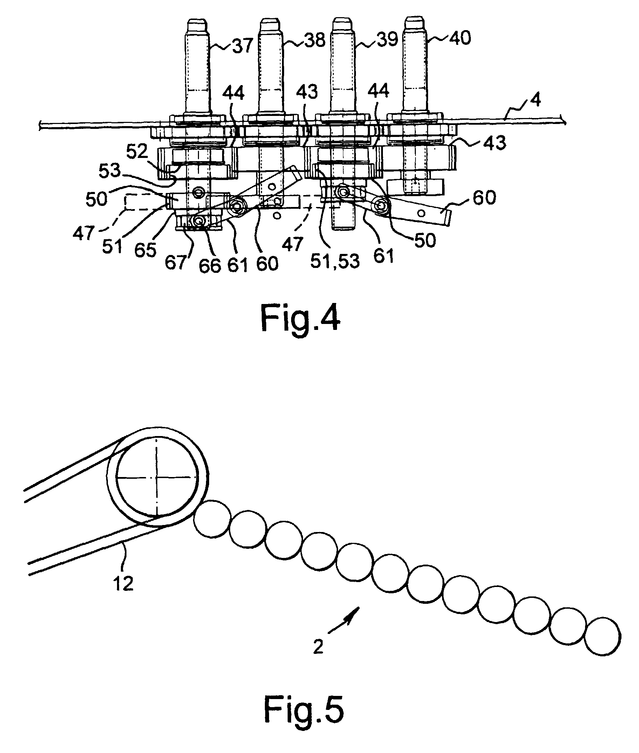

The way in which the gearing system is designed to drive those roller axles carrying the freely rotatable gearwheels 44 will now be described in detail, with reference in particular to Fig.4. Fig.4 shows four consecutive roller axles 37 38,39, 40 from the downstream portion of the roller bed. The two axles 37,39 each carrying one of the second set of gearwheels, which gearwheels as afore-described are each freely rotatable about a bearing 45 provided on the respective axle, are each further provided towards an outer end thereof with a movable gearwheel 50 (the "fifth set of gearwheels") mounted for sliding movement up and down the axle. A radially inner surface of each of these movable gearwheels 50 is splined to complementary splines provided on the roller axle portion along which the movable gearwheel slides. Each of the freely rotatable gearwheels 44 rotatable about the bearings 45 has a complementary recessed portion 52 for receiving the movable gearwheel 50 therein (which therefore has a smaller radially outer diameter than said freely rotatable gearwheels 44), the inner radial surface of the gearwheel 44 defining said recessed portion 52 having complementary teeth/splines 53 for engaging with the teeth 51 on the outer radial surface of the movable gearwheel 50. The movable gearwheel can be moved between a first end position in which is fully received within the recessed portion 52 of the freely rotatable gearwheel 44 (this is the position of the movable gearwheel 50 on the second roller axle from the right 38, in Fig.4), and a second end position in which it is fully outside the recessed portion and makes contact with a respective one of the idler gearwheels 47 (this is the position of the movable gearwheel 50 on the first roller axle from the left 36, in Fig.4. For clarity, the idler gearwheels 47 have been shown in broken lines in Fig.4). The movable gearwheels are moved by means of a mechanical arrangement comprising a lever 60 connected to one end of a first linkage 61 which is pivotally linked, via a pin 66, at its other end to a bracket member 67 to which is connected a sleeve 65 encircling the roller axle (but not splined thereto) for free slidable movement up and down the axle (which rotates inside the sleeve 65). The lever 60 is disposed on an outer side of the frame 4 of the separator for easy access by a user. The movable gearwheel 50 is disposed on the roller axle so as to be between the sleeve 65 and the freely rotatable gearwheel 44, and the sleeve 65 is connected to the movable gearwheel 50 so that movement of the sleeve up and down the roller axle also moves the movable gearwheel 50 up and down the axle. Movement of the lever 60 thus results in sliding movement of the movable gearwheel 50 between its first and second end positions.

It will be appreciated that when the movable gearwheel 50 is in its second end position, in engagement with the idler gearwheel 47, the roller axle 37 to which it is splined is driven by the idler gearwheel 47 and is therefore made to rotate in the same direction as the neighbouring axle 36 (not shown in Fig.4) whose first set gearwheel 43 drives the idler 47. With the movable gearwheel 50 in its first end position, in which it is engaged in the recessed portion 52 of the freely rotatable gearwheel 44, the freely rotatable gearwheel is now splined to the movable gearwheel 50 which, in turn, is splined to the roller axle 37. Thus, the freely rotatable gearwheel can no longer freely rotate about the bearing 45, and will instead now rotate with the roller axle 37. It will be appreciated therefore that with the movable gearwheel 50 in this first end position the roller axle 37 on which it is mounted rotates in the opposite direction to the adjacent roller axles thereto.

Thus, by moving the levers 60, a user can arrange the gearing so as to have alternate ones of the roller axles 32-42 contra-rotating, or so as to have several consecutive rollers rotating in the same direction. In dry weather conditions it will generally be desirable to have as many of the rollers as possible rotating in the same direction, since the harvested crop should not contain any mud or large clods. In wet weather conditions, it will generally be desirable to have all the movable gearwheels 50 in their first end position, engaged with the freely rotatable gearwheels 44, so that the roller axles carrying the movable gearwheels rotate in the opposite direction to the roller axles adjacent thereto: with this counter-rotating roller movement the separator of the invention has been found to be very effective in dealing with wet harvested crop containing a large percentage by weight of mud, clods, stones etc. In the Figs. 2-3 embodiment, in dry weather conditions the gears would be set so that the first 31, second 32 and fourth 34 roller axles in the upstream portion , and all the roller axles in the downstream portion, of the roller bed rotate in the clockwise direction.

It should be noted that the distance, in a direction parallel to the roller axles, between the idler gearwheel 47 and the freely rotatable gearwheel 44 must be sufficiently large that when the movable gearwheel 50 is being moved from its first end position to its second end position (and vice versa) there will be a point at which the movable gearwheel is not in contact with either the freely rotatable gearwheel 44 or the idler 47. This avoids jamming or damage to the separator which would be likely to occur if there were to be instances at which the roller axles carrying the movable gearwheels 50 were being simultaneously driven by both the idlers 47 and the adjacent gearwheels 44 fixed to adjacent roller axles.

It should be noted that the movable gearwheels 50, and the lever arrangement for moving the same, have been shown in Fig. 2 on the three relevant axles in the downstream portion of the roller bed, but have for clarity not been shown in Fig. 3.

With reference to the upstream portion of the roller bed, only one 34 of the roller axles therein is provided with one of the freely rotatable types of gearwheels 44 and one of the movable gearwheels 50. The arrangement for sliding this moving gearwheel along the roller axle 34 is slightly different in that it must be carried out entirely manually without the aid of the mechanical lever 60 and sliding sleeve 65 arrangement illustrated in Fig.4, as provided for the relevant roller axles 37,39,41 in the downstream portion of the roller bed. The user would instead slide the movable gearwheel in and out of the recessed portion of the freely rotatable gearwheel 44 by hand, as desired. This will necessitate taking the front cover 9, covering the gearing, off of the frame 4 of the separator. The upstream portion of the roller bed has been designed in this manner in this particular illustrated embodiment in order to fit into a limited available space present in certain known agricultural harvester designs. However, where other harvester designs are used where more space is available for the upstream portion of the roller bed, it is envisaged that the upstream portion will have a similar design to the downstream portion, with lever(s) 60 protruding from the separator frame 4 to allow easy adjustment of the movable gearwheel(s) 50 by a user. Furthermore, in an alternative possible embodiment, the movement of the movable gearwheels 50 is automatically controlled by electrically controlled hydraulic arrangement(s).

It will be appreciated that the above-described separator will normally be incorporated in a mobile agricultural machine, which may be of the trailed or self-propelled type, and which may incorporate apparatus for performing other agricultural operations such as harvesting and/or grading. The separator is preferably be mounted in the agricultural machine so that its angle of inclination is adjustable to at least some extent, whereby the bed of rollers (and overhead pintle belt) can be inclined relative to the ground traversed by the machine. In practice, the bed of rollers will usually be inclined so as to slope downwardly from the upstream to the downstream end of the bed of rollers, as indicated schematically in Fig. 5 which shows a possible relative arrangement of the supply conveyor 12 and the inclined bed of rollers 2. The adjustable inclination of the bed of rollers will be achieved most conveniently by the use of hydraulic rams by means of which the user can set the separator to a desired inclination. In the preferred embodiment the inclination of the separator can preferably be set at any angle within a predetermined range which will include a substantially horizontal position (as shown in Fig. 1), as well as upwardly and downwardly sloping positions.

## Claims

1. A separator (1) for use in separating tubers (14) or the like from haulm, clods, weeds, stones and the like collected during harvesting, the separator comprising: at least one pair of substantially parallel elongate rollers (2) arranged transversely to the direction of travel thereover of objects (14, 15) to be separated; an overhead endless belt (3) having an engaging reach arranged above the rollers for engagement with tubers or the like (14) disposed on said rollers in use of the separator, so as to impart drive to the tubers; roller driving means comprising a drive motor (29) and gearing means (20) for transmitting drive from the drive motor to the rollers, said gearing means being formed and arranged for selectively transmitting drive to the rollers in a first condition so that said pair of rollers (2) rotate in opposite directions and in a second condition so that said pair of rollers rotate in the same direction; and control means (60) for enabling a user to select a desired one of said conditions of the gearing means.

2. A separator according to claim 1 wherein the separator includes a multiplicity of substantially parallel elongate rollers (2) arranged transversely to the direction of travel thereover of the objects to be separated and the gearing means (20) is formed and arranged for controlling the rotation of the rollers in at least two adjacent pairs of the rollers so that in a first condition of the gearing means alternate rollers contra-rotate and in a second condition of the gearing ) means all the rollers in said pairs rotate in the same direction, said control means (60) being formed and arranged to enable a user to set the gearing means in a selected one of said first and second conditions.

3. A separator according to claim 1 or claim 2 wherein the engaging reach of the overhead endless belt extends over a substantial number of said multiplicity of rollers (2).

4. A separator according to claim 2 or claim 3 wherein the gearing means is formed and arranged for transmitting drive from each roller to the next roller, from an upstream end of the separator (1) towards a downstream end thereof.

5. A separator according to any preceding claim wherein the gearing means comprises gearwheels (43,44) formed and arranged such that in said first condition of the gearing means drive is transmitted directly from each roller to the next roller in the downstream direction, via gearwheels mounted on and rotating with said roller and said next roller respectively, and in said second condition of the gearing means drive is transmitted indirectly between at least some adjacent rollers, via an idler gearwheel (47) located between the adjacent rollers.

6. A separator according to any preceding claim wherein opposite end portions of each roller are mounted in opposing elongate members of a frame means of the separator.

7. A separator according to any preceding claim wherein each roller comprises a roller portion affixed to a drive axle, and wherein the gearing means comprises: a first set of gearwheels (43) mounted to the drive axles of a first set of the rollers for rotation therewith; a second set of gearwheels (44) arranged for rotation about the drive axles of a second set of the rollers, via bearing means (45) mounted radially between the drive axles of said second set of the rollers and said second set of gearwheels, wherein each gearwheel of said second set of gearwheels is adjacent at least one gearwheel of said first set of gearwheels for driven engagement therewith; a third set of gearwheels (47) comprising idler gearwheels formed and arranged for rotation by a fourth set of gearwheels (46), said fourth set of gearwheels being mounted for rotation with the same drive axles as said first set of gearwheels; and a fifth set of gearwheels (50) comprising a respective moveable gearwheel provided for each one of said rollers provided with one of said second set of gearwheels, each said moveable gearwheel being splined to the drive axle of said roller and slideable between a first end position in which said moveable gearwheel is rotated by a respective said one of the idler gearwheels (47), and a second end position in which said moveable gearwheel is engaged with a respective gearwheel of said second set of gearwheels (44) so as to cause the roller drive axle splined to said moveable gearwheel to instead rotate therewith.

8. A separator according to claim 7 wherein the rollers of said first and second sets of rollers are interspersed such that, with said movable gearwheels (50) in their second end positions, the separator (1) comprises at least two pairs of contra-rotating rollers (2).

9. A separator according to claim 8 wherein said at least two pairs of contra-rotating rollers are adjacent.

10. A separator according to any of claims 7 to 9, wherein each of said second set of gearwheels (44) has internal gear teeth for complimentary engagement with external gearteeth of a respective said moveable gearwheel (50) when the moveable gearwheel is in its second end position, whereby the roller drive axle, moveable gearwheel and respective gearwheel of said second set of gearwheels are locked together for rotation in the same direction.

11. A separator according to any of claims 7 to 10, wherein said control means comprises control lever means (60) mechanically linked to at least one said moveable gearwheel (50) for enabling a user to slide said at least one moveable gearwheel between said first and second end positions thereof.

12. A separator according to any of claims 7 to 11, wherein separate control lever means (60) is provided for each said roller which has a said moveable gearwheel (50) slideably mounted thereto.

13. A separator according to any of claims 7 to 12, wherein said moveable gearwheels (50) are moved between their first and second said end positions automatically by hydraulic means (60) and/or electrical means provided with the separator.

14. A separator according to any of claims 7 to 13, wherein each said moveable gearwheel (50) is independently moveable relative to the other said moveable gearwheels.

15. An agricultural apparatus incorporating a separator according to any preceding claim.
